# FASCICULE DE BREVET EUROPEEN

(11) **EP 3 833 465 B1**
(45) Date de publication et mention de la délivrance du brevet: **17.07.2024**
(21) Numéro de dépôt: 19790685.2
(22) Date de dépôt: 23.09.2019
(51) Int. Cl.: B01D 53/02, G21F 9/02, G21F 9/30, B01J 20/02

(54) **MATÉRIAU INORGANIQUE, PARTICULAIRE ET POREUX, À BASE DE PHOSPHATE D'ARGENT, POUR L'ADSORPTION ET LA CAPTURE D'IODE GAZEUX, SON PROCÉDÉ DE PRÉPARATION ET SES UTILISATIONS**
PARTIKELFÖRMIGES PORÖSES ANORGANISCHES MATERIAL AUF SILBERPHOSPHATBASIS ZUR ADSORPTION UND AUFNAHME VON GASFÖRMIGEM JOD, VERFAHREN ZU SEINER HERSTELLUNG UND SEINE VERWENDUNGEN
PARTICULATE POROUS SILVER PHOSPHATE-BASED INORGANIC MATERIAL FOR ADSORPTION AND CAPTURE OF GASEOUS IODINE, METHOD OF PREPARATION AND USES THEREOF

(30) Priorité: 26.09.2018 FR 1858832
(43) Date de publication de la demande: 16.06.2021
(73) Titulaire: Commissariat à l'énergie atomique et aux énergies alternatives, 75015 Paris (FR)
(72) Inventeur: CAMPAYO, Lionel, 30200 BAGNOLS SUR CEZE (FR); LEMAITRE, Virginie, 30290 LAUDUN (FR); DEBONO, Valérie, 13550 NOVES (FR)
(74) Mandataire: Brevalex
(86) Numéro de dépôt international: PCT/FR2019/052216
(87) Numéro de publication internationale: WO 2020/065186

(56) Documents cités:
- EP-A1- 0 034 037
- EP-A1- 0 034 037
- EP-A1- 0 608 057
- JP-A- H09 171 096
- US-A- 4 933 159
- US-A- 5 091 358
- US-A1- 2018 008 954
- JOFFREY HUVE ET AL: "Porous sorbents for the capture of radioactive iodine compounds: a review", RSC ADVANCES, vol. 8, no. 51, 1 January 2018 (2018-01-01), UK, pages 29248 - 29273, XP055607058, ISSN: 2046-2069, DOI: 10.1039/C8RA04775H
- RILEY BRIAN J ET AL: "Materials and processes for the effective capture and immobilization of radioiodine: A review", JOURNAL OF NUCLEAR MATERIALS, ELSEVIER B.V, NETHERLANDS, vol. 470, 2 December 2015 (2015-12-02), pages 307 - 326, XP029411246, ISSN: 0022-3115, DOI: 10.1016/J.JNUCMAT.2015.11.038
- YANG JAE HWAN ET AL: "Silver phosphate glasses for immobilization of radioactive iodine", ANNALS OF NUCLEAR ENERGY, PERGAMON PRESS, OXFORD, GB, vol. 110, 28 June 2017 (2017-06-28), pages 208 - 214, XP085200924, ISSN: 0306-4549, DOI: 10.1016/J.ANUCENE.2017.06.042

## Description

### DOMAINE TECHNIQUE

L'invention se rapporte au domaine du traitement des effluents gazeux comprenant de l'iode et, notamment, de l'iode radioactif.

Plus spécifiquement, elle se rapporte à un procédé de préparation d'un matériau inorganique, particulaire et poreux, qui présente une forte capacité à adsorber et retenir l'iode à l'état gazeux lorsqu'il est mis en contact avec cet iode et qui, une fois chargé en iode, peut être transformé, par un simple traitement thermique, en une matrice vitreuse ou vitrocéramique dans laquelle l'iode est confiné.

Elle se rapporte également à un matériau inorganique, particulaire et poreux qui est obtenu par ce procédé de préparation ainsi qu'à ses utilisations, en particulier pour le conditionnement d'iode gazeux dans une matrice vitreuse ou vitrocéramique.

L'invention trouve notamment application dans le domaine du traitement des combustibles nucléaires usés où elle est susceptible d'être utilisée pour conditionner et stocker dans une matrice l'iode radioactif présent dans les effluents gazeux produits au cours de ce traitement et, en particulier, l'iode-129, par exemple dans le cas où la gestion de cet iode par dilution isotopique dans l'iode marin n'est pas possible.

### ÉTAT DE LA TECHNIQUE ANTÉRIEURE

L'iode-129 est un produit de fission de moyenne activité à vie longue (demi-vie de 15,7 millions d'années) qui est généré lors des réactions de fission de l'uranium et du plutonium dans les centrales nucléaires et qui est donc présent dans les combustibles nucléaires usés.

En France, la gestion de l'iode-129 repose essentiellement sur une dilution isotopique dans l'iode marin, c'est-à-dire par un rejet en mer.

Dans la perspective d'un développement d'usines de traitement de combustibles nucléaires usés sans possibilité d'accès maritime ou d'une évolution de la règlementation qui interdirait la gestion de l'iode-129 par un rejet en mer, des recherches sont menées sur des modes de gestion alternatifs de l'iode-129 et, en particulier, sur son conditionnement dans une matrice stable, durable et résistante à la dissémination par des vecteurs tels que l'eau, en vue de son stockage en couche géologique profonde.

Il est connu de piéger de l'iode gazeux dans des adsorbants solides (ou filtres) qui sont typiquement à base d'alumine, de silice ou d'aluminosilicates (zéolithes) et qui sont imprégnés de nitrate d'argent. L'iode sous forme moléculaire, ou diiode l₂, réagit avec le nitrate d'argent pour former de l'iodure d'argent, Agl, et est retenu sous cette forme dans l'adsorbant solide. Des adsorbants de ce type sont actuellement utilisés pour capturer l'iode présent dans des effluents gazeux dans les usines de traitement de combustibles nucléaires usés.

Il a été proposé dans EP-A-0 608 057 - ci-après référence **[3]** - un matériau comprenant un support poreux particulaire, tel qu'un matériau constitué de particules d'alumine activée, dans les pores duquel sont présents deux composés capables d'adsorber de l'iode, à savoir un composé soluble dans l'eau du type nitrate d'argent et un composé insoluble dans l'eau du type argent à l'état de métal.

Par ailleurs, le conditionnement de l'iode par incorporation dans des matrices de type cimentaire, céramique (apatites notamment) ou vitreuse a donné lieu à un grand nombre d'études. A en particulier été étudiée la possibilité de conditionner l'iode dans des matrices en verres de chalcogénures, de borates, de silicates de plomb ou de phosphates (phosphates de cuivre et phosphates d'argent). Voir, par exemple, la publication aux noms de Riley et al. (Journal of Nuclear Materials 2016, 470, 307-326), ci-après référence **[4].** Voir également JP H-09-171096, ci-après référence **[5].**

Récemment, un certain nombre d'Auteurs s'est intéressé au développement de matériaux qui soient capables d'adsorber de l'iode à l'état gazeux et qui puissent être, une fois chargés en iode, directement consolidés en une matrice de conditionnement.

Ainsi, par exemple, on peut citer les travaux de J. Matyáš et R. K. Engler (*FCRD-SWF-2013-000589* - *PNLL-22874,* Septembre 2013, ci-après référence **[1]**) relatifs à des aérogels de silice fonctionnalisés par de l'argent à l'état de métal et à leur consolidation en une matrice siliceuse partrois types de traitement thermique : un pressage uniaxial à chaud (ou HUP), un pressage isostatique à chaud (ou HIP) et un frittage flash (ou SPS).

Outre que, dans les essais de consolidation rapportés dans cette référence, les aérogels ne sont pas chargés en iode, ils sont soumis, quel que soit le traitement thermique, à une température de 1200 °C-laquelle peut être inadaptée au conditionnement de l'iode-129 compte-tenu de sa volatilisation à une telle température - et à une pression qui est de 29 MPa pour le traitement HUP, de 207 MPa pour le traitement HIP et de 70 MPa pour le traitement SPS.

On peut également citer les travaux de B. J. Riley et al. (FCRD-SWF-2013-000249 - PNLL-22678, 28 août 2013, ci-après référence **[2])** relatifs à des chalcogels Sn₂S₃ ou Sb_{13,5}Sn₅S₂₀ et à leur consolidation en une matrice vitreuse par un traitement thermique. Dans cette référence, les essais d'adsorption d'iode gazeux par les chalcogels sont réalisés sous vide tandis que le traitement thermique des chalcogels chargés en iode est réalisé à une température allant de 400°C à 600°C, sous vide en ampoules à quartz scellées.

Les résultats des essais de consolidation des chalcogels chargés en iode n'étant pas satisfaisants, les Auteurs de la référence **[2]** concluent qu'il leur faudra utiliser dans leurs prochains travaux une température de consolidation supérieure à 700°C, ce qui, là aussi, est inadapté au conditionnement de l'iode-129 pour des questions de volatilisation.

Les références **[1]** et **[2]** sont des exemples parmi d'autres qui montrent la nécessité mais aussi la difficulté qui existent à développer un matériau qui soit capable d'adsorber très efficacement l'iode-129 lorsque celui-ci est à l'état gazeux et qui puisse ensuite être directement consolidé en une matrice de conditionnement et ce, par un traitement thermique pouvant :
- d'une part, être réalisé à une température qui minimise les risques de volatilisation de l'iode-129, c'est-à-dire typiquement une température au plus égale à 650°C, et à la pression ambiante ; et
- d'autre part, être simple à mettre en oeuvre, notamment en ne nécessitant pas d'avoir recours à des équipements peu ou pas adaptés à une exploitation industrielle tels que les ampoules scellées qui sont utilisées dans la référence **[2].**

### EXPOSÉ DE L'INVENTION

L'invention vise justement à proposer, en premier lieu, un procédé permettant de préparer un matériau inorganique, particulaire et poreux, qui est doté d'une forte capacité à adsorber l'iode à l'état gazeux lorsqu'il est mis en contact avec cet iode gazeux et qui, une fois chargé en iode, peut être transformé, par un simple traitement thermique, en une matrice vitreuse ou vitrocéramique dans laquelle l'iode est confiné.

Ce matériau est formé de particules qui comprennent chacune une phase solide, la phase solide comprenant :
- de l'argent à l'état oxydé lié à du phosphore et, optionnellement, de l'argent à l'état oxydé lié à un ou plusieurs cations choisis parmi le molybdène, le bore, le vanadium, le chrome et le tungstène et/ou un ou plusieurs oxydes métalliques tels que Al₂O₃, Bi₂O₃, Ga₂O₃, Nb₂O₅, ZnO, etc., ainsi que
- des pores ouverts, interconnectés, dont la surface comprend de l'argent à l'état de métal, lequel est apte à réagir avec l'iode pour former de l'iodure d'argent, Agl.

Le procédé de préparation de ce matériau comprend les étapes de :
a) préparation d'une solution aqueuse A1 comprenant un alginate d'un métal alcalin et une matière inorganique qui comprend du phosphate d'argent et, optionnellement, un ou plusieurs composés d'argent oxydé lié à un cation choisi parmi le molybdène, le bore, le vanadium, le chrome et le tungstène et/ou un ou plusieurs oxydes métalliques ;
b) extrusion sous une forme divisée de la solution aqueuse A1 dans une solution aqueuse A2 comprenant un sel d'un métal alcalino-terreux, moyennant quoi on obtient des billes formées d'un hydrogel comprenant le phosphate d'argent et l'alginate de sel alcalin ;
c) séchage des billes ; et
d) calcination des billes séchées.

Dans ce qui précède et ce qui suit, on entend :
- par *matériau inorganique,* un matériau qui ne comprend ni carbone ni hydrogène ;
- par *pores ouverts et interconnectés,* des pores qui non seulement débouchent à la surface de la phase solide et, par conséquent, à la surface des particules - et qui communiquent donc avec l'extérieur de ces particules - mais communiquent également avec d'autres pores, eux-mêmes communiquant ou non avec l'extérieur des particules ; et
- par *argent à l'état oxydé,* de l'argent à l'état d'oxydation +1, noté Ag⁺ ;
- par *argent à l'état de métal,* de l'argent à l'état d'oxydation 0, noté Ag⁰.

Par ailleurs, on entend par *matrice vitreuse,* une matrice constituée d'un verre dénué de toute phase cristalline tandis que l'on entend par *matrice vitrocéramique,* une matrice constituée d'un verre comprenant une ou plusieurs phases cristallines.

Conformément à l'invention, le ou les composés d'argent susceptibles d'être présents dans la solution aqueuse A1, en plus du phosphate d'argent, peuvent notamment être choisis parmi le molybdate d'argent Ag₂MoO₄, les borates d'argent AgBOz, AgBsOs, Ag₃BO₃ et Ag₂B₄O₇, les vanadates d'argent AgVO₃, Ag₃VO₄ et Ag₄V₂O₇, les chromates d'argent AgCrO₃ et Ag₂CrO₄, et les tungstates d'argent Ag₂WO₄ et AgWO₃.

Quant à l'oxyde métallique ou aux oxydes métalliques susceptibles d'être présents dans la solution aqueuse A1, il peut s'agir de l'un des oxydes précités ou de plusieurs d'entre eux.

L'alginate de métal alcalin est avantageusement un alginate de sodium ou de potassium, préférence étant donnée à un alginate de sodium.

Cet alginate de sodium est, par exemple, l'alginate ayant le numéro CAS 9005-38-3 et qui est disponible auprès de la société Sigma-Aldrich sous la dénomination « Alginic acid sodium salt ». Ce sel présente une viscosité dynamique de 15 à 25 cP pour une concentration massique de 1 % dans l'eau à 20 °C.

Conformément à l'invention, dans lequel la solution aqueuse A1 comprend, de préférence, de 5 % à 10 % massiques de matière inorganique, les pourcentages massiques étant rapportés à la masse de la solution aqueuse A1. Ainsi :
- si la matière inorganique présente dans la solution aqueuse A1 ne comprend que du phosphate d'argent, alors le phosphate d'argent représente, de préférence, de 5 % à 10 % massiques de la solution aqueuse A1; tandis que
- si la matière inorganique présente dans la solution aqueuse A1 comprend, outre du phosphate d'argent, un ou plusieurs composés d'argent oxydé lié à un cation choisi parmi Mo, B, V, Cr et W, et/ou un ou plusieurs oxydes métalliques, alors c'est la somme des masses des composants de la matière organique qui représente, de préférence, de 5 % à 10% de la masse de la solution aqueuse A1; auquel cas, le phosphate d'argent représente avantageusement de 2,5 % à 5 % massiques de la solution aqueuse A1.

Quoi qu'il en soit, l'alginate de métal alcalin représente, lui, préférentiellement de 0,5 % à 3 % massiques de la solution aqueuse A1.

De préférence, le sel de métal alcalino-terreux de la solution aqueuse A2 est un sel de calcium ou de baryum, tandis que le contre-ion est l'ion nitrate.

L'extrusion peut être réalisée par tout dispositif qui permet de délivrer la solution aqueuse A1 sous une forme divisée et, notamment sous la forme de gouttes, dans la solution aqueuse A2 tel qu'une seringue munie d'une aiguille ou un conduit qui comprend, à l'une de ses extrémités, une aiguille et dont l'autre extrémité est reliée à une pompe, par exemple péristaltique.

Conformément à l'invention, le procédé de préparation comprend avantageusement de plus, entre l'étape b) et l'étape c), un remplacement de tout ou partie de l'eau de l'hydrogel par un solvant organique ayant une température d'ébullition standard (c'est-à-dire une température d'ébullition à une pression de 1013,25 hPa) inférieure à la température d'ébullition standard de l'eau ou, autrement dit, inférieure à 100°C, en vue de faciliter le séchage des billes à l'étape c).

Le solvant organique est, par exemple, un alcool tel que le méthanol ou l'éthanol, préférence étant donnée à l'éthanol.

Quant au remplacement de tout ou partie de l'eau de l'hydrogel par un solvant organique, il peut être réalisé en égouttant les billes obtenues à l'étape b), en les rinçant avec de l'eau puis en les immergeant dans une succession de bains comprenant soit uniquement le solvant organique soit un mélange eau/solvant organique de concentration volumique croissante en solvant organique.

Le séchage des billes obtenues à l'étape b) ou après remplacement de tout ou partie de l'eau de l'hydrogel par un solvant organique est, par exemple, réalisé en plaçant ces billes dans une étuve de chauffage réglée, par exemple à la température de 60°C, pendant plusieurs heures.

Quant à la calcination des billes ainsi séchées, elle est, de préférence, réalisée en plaçant les billes dans un four, avec une rampe de montée en température de 5 °C/min pour atteindre une température allant de 300°C à 600°C et, mieux encore, de 400 °C à 500 °C, pendant de 1 à 5 heures.

L'invention a également pour objet un matériau inorganique, qui est formé de particules comprenant chacune une phase solide, la phase solide comprenant :
- de l'argent à l'état oxydé lié à du phosphore et, optionnellement, de l'argent à l'état oxydé lié à un ou plusieurs cations choisis parmi le molybdène, le bore, le vanadium, le chrome et le tungstène et/ou un ou plusieurs oxydes métalliques, et
- des pores ouverts, interconnectés, dont la surface comprend de l'argent à l'état de métal,
et qui est obtenu par un procédé tel que décrit ci-avant.

De préférence, les particules formant le matériau ont des dimensions (telles que déterminées, par exemple, par granulométrie laser) comprises entre 300 µm et 3000 µm.

L'invention a également pour objet l'utilisation de ce matériau pour adsorber de l'iode gazeux par mise en contact de ce matériau avec l'iode gazeux.

L'invention a en outre pour objet l'utilisation dudit matériau pour capturer l'iode présent dans un effluent gazeux par mise en contact de ce matériau avec l'effluent gazeux.

L'invention a encore pour objet un procédé de traitement d'un effluent gazeux comprenant de l'iode, qui comprend les étapes de :
i) capture de l'iode par mise en contact de l'effluent gazeux avec un matériau tel que précédemment défini, moyennant quoi on obtient un matériau comprenant de l'iodure d'argent ; puis
ii) traitement thermique du matériau comprenant de l'iodure d'argent, moyennant quoi on transforme le matériau comprenant de l'iodure d'argent en une matrice vitreuse ou vitrocéramique dans laquelle est confiné l'iodure d'argent.

Le verre qui constitue la matrice vitreuse ou la partie vitreuse de la matrice vitrocéramique est un verre à base de phosphate d'argent.

Conformément à l'invention, l'étape ii) comprend, de préférence, un chauffage du matériau à une température allant de 400 °C à 650 °C, pendant de 30 minutes à 2 heures.

L'invention a enfin pour objet un procédé de conditionnement d'iode gazeux dans une matrice vitreuse ou vitrocéramique, qui comprend la mise en oeuvre du procédé de traitement d'un effluent gazeux comprenant de l'iode tel que précédemment défini.

Conformément à l'invention, l'iode présent dans l'effluent gazeux est, de préférence, de l'iode radioactif et, notamment, de l'iode-129.

D'autres caractéristiques et avantages de l'invention apparaîtront à la lecture du complément de description qui suit et qui se rapporte à des exemples de préparation de matériaux de l'invention.

Il va de soi que ce complément de description n'est donné qu'à titre d'illustration de l'objet de l'invention et ne constitue en aucun cas une limitation de cet objet.

### BRÈVE DESCRIPTION DES FIGURES

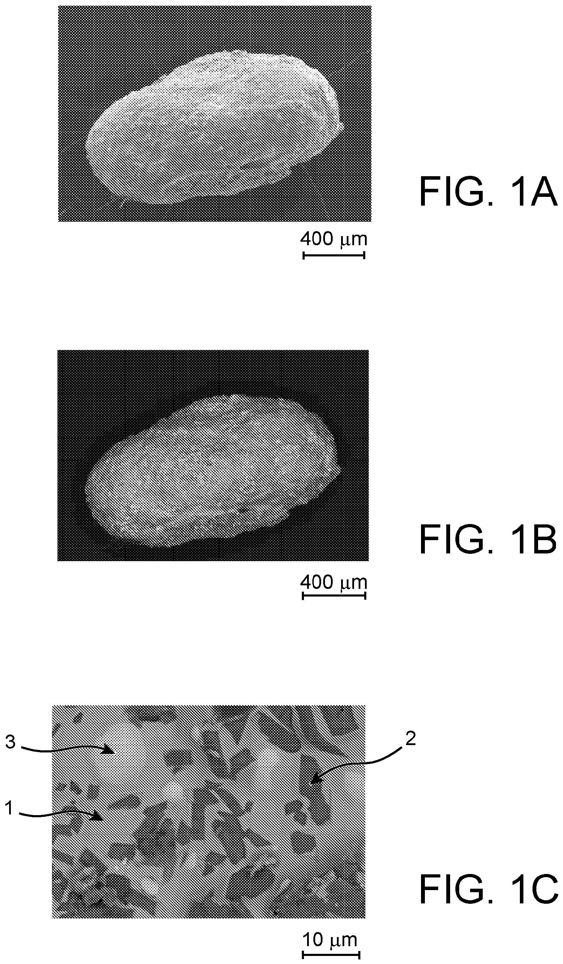

Les figures 1A, 1B et 1C sont des images prises au microscope électronique à balayage (MEB) d'une particule d'un premier matériau de l'invention avant exposition à des vapeurs de diiode ; la figure 1A est une image prise en mode électrons secondaires à un grandissement de x146, tandis que les figures 1B et 1C sont des images prises en mode électrons rétrodiffusés à un grandissement de x146 et x5000 respectivement.

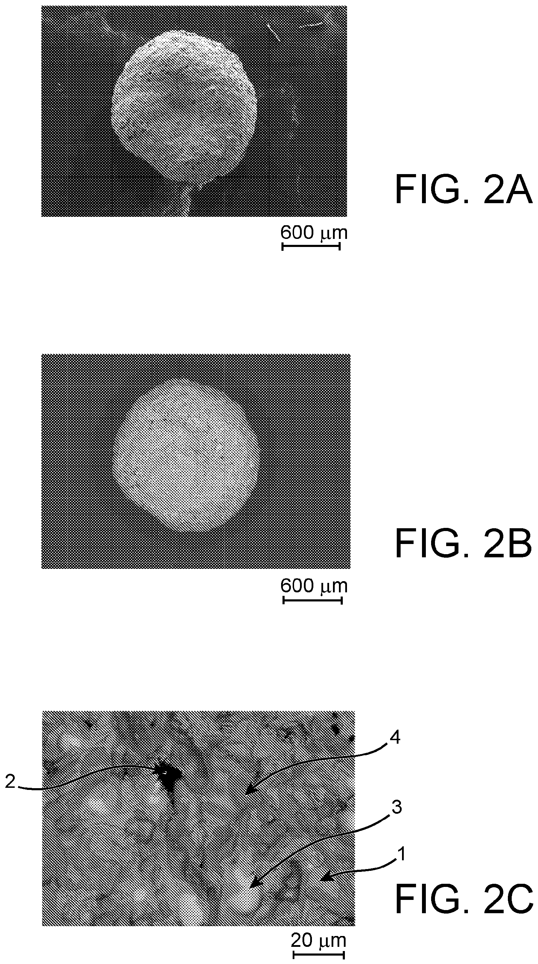

Les figures 2A, 2B et 2C sont des images prises au MEB d'une particule d'un deuxième matériau de l'invention avant exposition à des vapeurs de diiode ; la figure 2A est une image prise en en mode électrons secondaires à un grandissement de x90, tandis que les figures 2B et 2C sont des images prises en mode électrons rétrodiffusés à un grandissement de x90 et x2331 respectivement.

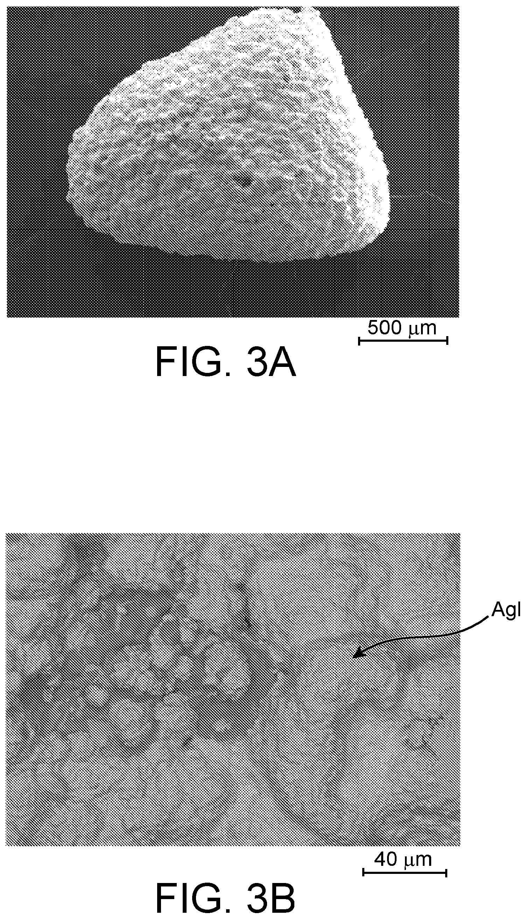

Les figures 3A et 3B sont des images prises au MEB d'une particule du premier matériau de l'invention après exposition à des vapeurs de diiode ; la figure 3A est une image prise en mode électrons secondaires à un grandissement de x116 tandis que la figure 3B est une image prise en mode électrons rétrodiffusés à un grandissement de x1346.

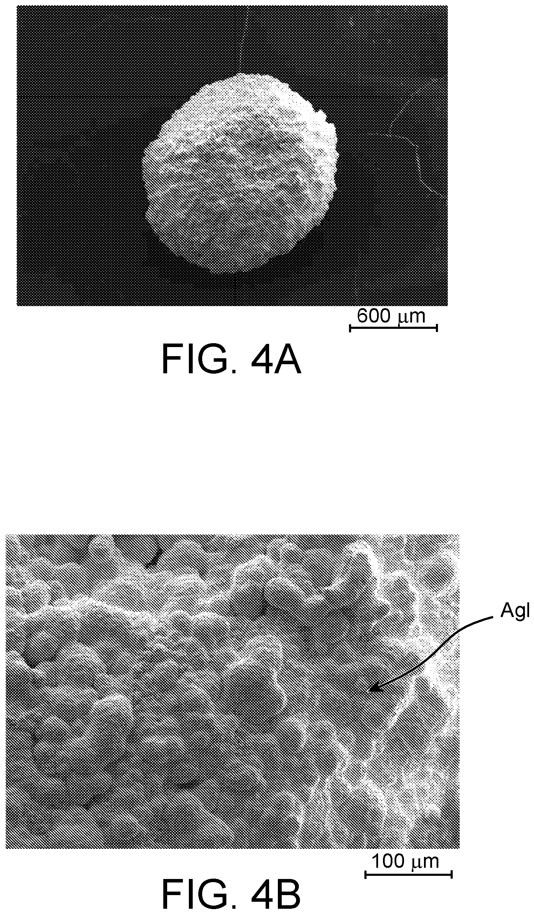

Les figures 4A et 4B sont des images prises au MEB d'une particule du deuxième matériau de l'invention après exposition à des vapeurs de diiode, en mode électrons secondaires à un grandissement de x100 et x562 respectivement.

### EXEMPLE DE MODES DE RÉALISATION PARTICULIERS DE L'INVENTION

### I - Préparation de matériaux de l'invention :

On prépare deux matériaux de l'invention - ci-après matériau 1 et matériau 2 - en suivant le protocole opératoire suivant :
1) on ajoute, à une solution aqueuse de phosphate d'argent Ag₃PO₄, sous agitation magnétique, de l'alginate de sodium (Sigma-Aldrich) pour obtenir une solution aqueuse dite A1, comprenant 7,5 % en masse de phosphate d'argent et 1% en masse d'alginate de sodium (soit 7,5 g de phosphate d'argent et 1 g d'alginate de sodium pour 100 mL d'eau) que l'on maintient sous faible agitation magnétique pendant 4 heures ;
2) on extrude sous la forme de gouttes la solution aqueuse A1 dans une solution aqueuse dite A2, qui est sous agitation magnétique et qui comprend 0,27 mol/L de nitrate de calcium Ca(NO₃)₂ pour le matériau 1 et 0,27 mol/L de nitrate de baryum Ba(NO₃)₂ pour le matériau 2 ; cette extrusion consiste à faire circuler la solution aqueuse A1 dans un conduit qui comprend, à l'une de ses extrémités, une aiguille et dont l'autre extrémité est reliée à une pompe péristaltique, et à faire tomber goutte à goutte, *via* l'ouverture de la pointe de l'aiguille, la solution aqueuse A1 dans la solution aqueuse A2, moyennant quoi on obtient des billes gélatineuses, de dimensions typiquement comprises entre 0,5 mm et 10 mm ; ces billes sont formées de phosphate d'argent et d'alginate de calcium pour le matériau 1 et de phosphate d'argent et d'alginate de baryum pour le matériau 2, les ions calcium et baryum divalents ayant, en effet, remplacé les ions sodium monovalents de l'alginate au cours de l'extrusion ;
3) on soumet les billes gélatineuses obtenues à l'issue de l'étape 2) à un échange eau/éthanol, ce qui permet à l'hydrogel qui les constitue d'être transformé en un alcoolgel ; pour ce faire, les billes sont égouttées, rincées avec de l'eau et placées en immersion dans un bain d'éthanol pendant 10 minutes ; cette immersion est répétée trois fois ;
4) on soumet les billes d'alcoolgel obtenues à l'issue de l'étape 3) à un séchage à 60°C pendant 16 heures ; puis
5) on soumet les billes d'alcoolgel séchées à une calcination à 500°C pendant 3 heures sous air (avec une rampe de montée en température de 5 °C/min).

Au cours de cette calcination, l'alginate présent dans les billes d'alcoolgel est décomposé et ces billes se transforment en particules, de dimensions typiquement comprises entre 300 µm et 3000 µm, et qui comprennent un squelette inorganique composé de phosphate d'argent et d'argent à l'état de métal, Ag⁰. La présence initiale de matière organique, représentée par l'alginate, dans les billes permet à la fois de générer une porosité et de réduire une partie des ions Ag⁺ présents dans le phosphate d'argent en Ag⁰.

Du fait de cette réduction, il se forme des « nodules » d'Ag⁰ qui seront des sites réactifs pour l'adsorption et la fixation subséquentes d'iode gazeux puisque l'argent à l'état de métal réagit avec l'iode sous forme moléculaire pour former de l'iodure d'argent, Agl. Le rapport molaire AgzO/PzOs de la fraction non métallique est également abaissé (< 3), ce qui est plus favorable à l'obtention finale d'une matrice vitreuse homogène.

Il est à noter que le taux de réduction des ions Ag⁺ en Ag⁰ est d'autant plus élevé que la température à laquelle est réalisée la calcination et la durée de cette calcination sont élevées. Il est donc possible de moduler ce taux par le choix des conditions de température et de durée dans lesquelles est réalisée la calcination.

Les matériaux 1 et 2 présentent une capacité d'adsorption et de fixation de l'iode gazeux qui varie entre 207 mg et 400 mg par g de matériau, soit une capacité qui s'inscrit dans le haut de la gamme des capacités d'adsorption et de fixation présentées par les adsorbants solides qui sont actuellement utilisés pour capturer l'iode présent dans des effluents gazeux dans les usines de traitement de combustibles nucléaires usés.

On soumet les particules des matériaux 1 et 2 à des analyses au microscope électronique à balayage.

Les figures 1A, 1B et 1C correspondent aux images obtenues pour une particule du matériau 1 (avec un grandissement de x146 pour les figures 1A et 1B et de x5000 pour la figure 1C), tandis que les figures 2A, 2B et 2C correspondent aux images obtenues pour une particule du matériau 2 (avec un grandissement de x90 pour les figures 2A et 2B et un grandissement de x2331 pour la figure 2C).

Sur la figure 1C :
- la flèche numérotée ① montre que la particule du matériau 1 comprend une matrice riche en argent, oxygène et phosphore avec des traces de calcium ;
- la flèche numérotée (2) montre la présence, dans la matrice, de grains noirs qui sont riches en oxygène, argent, phosphore et calcium ; tandis que
- la flèche numérotée (3) montre la présence, dans la matrice, de grains blancs qui sont constitués d'Ag⁰.

Sur la figure 2C :
- la flèche numérotée ① montre que la particule du matériau 2 comprend une matrice riche en argent, oxygène et phosphore avec des traces de baryum ;
- la flèche numérotée (2) montre la présence, dans la matrice, de grains noirs riches en oxygène, phosphore et baryum ;
- la flèche numérotée ③ montre la présence, dans la matrice, de grains blancs qui constitués d'Ag⁰ ; tandis que
- la flèche numérotée ④ montre la présence, dans la matrice, de cristaux gris qui sont riches en argent, oxygène et phosphore.

### II - Exposition de matériaux de l'invention à de l'iode gazeux :

Les matériaux 1 et 2 obtenus au point I ci-avant sont exposés à des vapeurs de diiode, I₂, à 110°C pendant 18 heures.

À l'issue de cette exposition, on soumet de nouveau les particules des matériaux 1 et 2 à des analyses au microscope électronique à balayage.

Les figures 3A et 3B correspondent aux images obtenues pour une particule du matériau 1 (avec un grandissement de x116 pour la figure 3A et de x1346 pour la figure 3B), tandis que les figures 4A et 4B correspondent aux images obtenues pour une particule du matériau 2 (avec un grandissement de x100 pour la figure 4A et de x562 pour la figure 4B).

Comme le montrent ces figures, la surface des particules présente une enveloppe en Agl suite à la réaction des nodules d'Ag⁰ avec les vapeurs de diiode. En raison du volume molaire plus élevé d'Agl par rapport à l'argent métallique des nodules, l'iodure d'argent peut finir par recouvrir entièrement la surface des particules.

### III -Transformation de matériaux de l'invention en matrices de conditionnement :

Les matériaux 1 et 2 chargés en iode, obtenus au point Il ci-avant, sont soumis à un traitement thermique dans un four à moufle préalablement porté à une température de 650 °C pendant une heure puis sortis à chaud du four pour être soumis à une trempe sous air.

### RÉFÉRENCES CITÉES :

**[1]** J. Matyáš et R. K. Engler, *FCRD-SWF-2013-000589* - *PNLL-22874,* Septembre 2013
**[2]** B. J. Riley et al., FCRD-SWF-2013-000249- PNLL-22678, 28 août 2013
**[3]** EP-A-0 608 057
**[4]** Riley et al., Journal of Nuclear Materials 2016, 470, 307-326
**[5]** JP H-09-171096, ci-après référence

## Revendications

1. Procédé de préparation d'un matériau inorganique, qui est formé de particules comprenant chacune une phase solide, la phase solide comprenant :
- de l'argent à l'état oxydé lié à du phosphore et, optionnellement, de l'argent à l'état oxydé lié à un ou plusieurs cations choisis parmi le molybdène, le bore, le vanadium, le chrome et le tungstène et/ou un ou plusieurs oxydes métalliques, et
- des pores ouverts, interconnectés, dont la surface comprend de l'argent à l'état de métal,
lequel procédé comprend les étapes de :
a) préparation d'une solution aqueuse A1 comprenant un alginate d'un métal alcalin et une matière inorganique comprenant du phosphate d'argent et, optionnellement, un ou plusieurs composés d'argent oxydé lié à un cation choisi parmi le molybdène, le bore, le vanadium, le chrome et le tungstène et/ou un ou plusieurs oxydes métalliques ;
b) extrusion sous une forme divisée de la solution aqueuse A1 dans une solution aqueuse A2 comprenant un sel d'un métal alcalino-terreux, moyennant quoi on obtient des billes formées d'un hydrogel comprenant le phosphate d'argent et l'alginate de sel alcalin ;
c) séchage des billes ; et
d) calcination des billes séchées.

2. Procédé selon la revendication 1, qui comprend de plus, entre l'étape b) et l'étape c), un remplacement de tout ou partie de l'eau de l'hydrogel par un solvant organique ayant une température d'ébullition standard inférieure à 100 °C, de préférence par un alcool.

3. Procédé selon la revendication 1 ou la revendication 2, dans lequel la solution aqueuse A1 comprend de 0,5 % à 3 % massiques d'alginate de métal alcalin et de 5 % à 10 % massiques de matière inorganique, les pourcentages massiques étant rapportés à la masse de la solution aqueuse A1.

4. Procédé selon l'une quelconque des revendications 1 à 3, dans lequel le sel de métal alcalino-terreux est un sel de calcium ou de baryum, de préférence un nitrate.

5. Procédé selon l'une quelconque des revendications 1 à 4, dans lequel les billes sont calcinées à une température allant de 300 °C à 600 °C pendant de 1 à 5 heures.

6. Matériau inorganique, qui est formé de particules comprenant chacune une phase solide, la phase solide comprenant :
- de l'argent à l'état oxydé lié à du phosphore et, optionnellement, de l'argent à l'état oxydé lié à un ou plusieurs cations choisis parmi le molybdène, le bore, le vanadium, le chrome et le tungstène et/ou un ou plusieurs oxydes métalliques, et
- des pores ouverts, interconnectés, dont la surface comprend de l'argent à l'état de métal,
lequel matériau est obtenu par un procédé selon l'une quelconque des revendications 1 à 5.

7. Matériau selon la revendication 6, dont les particules ont des dimensions comprises entre 300 µm et 3000 µm.

8. Utilisation d'un matériau selon la revendication 6 ou la revendication 7, pour adsorber de l'iode gazeux par mise en contact du matériau avec l'iode gazeux.

9. Utilisation d'un matériau selon la revendication 6 ou la revendication 7, pour capturer l'iode présent dans un effluent gazeux par mise en contact du matériau avec l'effluent gazeux.

10. Procédé de traitement d'un effluent gazeux comprenant de l'iode, qui comprend les étapes de :
i) capture de l'iode par mise en contact de l'effluent gazeux avec un matériau selon la revendication 6 ou la revendication 7, moyennant quoi on obtient un matériau comprenant de l'iodure d'argent ; puis
ii) traitement thermique du matériau comprenant de l'iodure d'argent, moyennant quoi on transforme le matériau comprenant de l'iodure d'argent en une matrice vitreuse ou vitrocéramique dans laquelle est confiné l'iodure d'argent.

11. Procédé de traitement selon la revendication 10, dans lequel l'étape ii) comprend un chauffage du matériau à une température allant de 400 °C à 650 °C.

12. Procédé de conditionnement d'iode gazeux dans une matrice vitreuse ou vitrocéramique, qui comprend la mise en oeuvre du procédé de traitement d'un effluent gazeux comprenant de l'iode selon la revendication 10 ou la revendication 11.

13. Utilisation selon la revendication 8 ou la revendication 9, ou procédé selon l'une quelconque des revendications 10 à 12, dans laquelle ou lequel l'iode présent dans l'effluent gazeux est de l'iode radioactif.

14. Utilisation ou procédé selon la revendication 13, dans laquelle ou lequel l'iode radioactif est de l'iode-129.

## Patentansprüche

1. Verfahren zum Herstellen eines anorganischen Materials, das aus Partikeln gebildet ist, die jeweils eine feste Phase umfassen, wobei die feste Phase umfasst:
- Silber im oxidierten Zustand, an Phosphor gebunden, und, optional, Silber im oxidierten Zustand an ein oder mehrere Kationen gebunden, die aus Molybdän, Bor, Vanadium, Chrom und Wolfram und/oder einem oder mehreren Metalloxyden ausgewählt sind, und
- offene, miteinander verbundene Poren, deren Oberfläche Silber im Metallzustand umfasst,
wobei das Verfahren die Schritte umfasst zum:
a) Herstellen einer wässrigen Lösung A1, welche ein Alginat aus einem Alkalimetall umfasst, und ein anorganisches Material, das Silberphosphat umfasst, und, optional, eine oder mehrere Verbindungen aus oxidiertem Silber, das an ein Kation gebunden ist, das aus Molybdän, Bor, Vanadium, Chrom und Wolfram und/oder mehreren Metalloxyden ausgewählt ist;
b) Extrudieren in einer geteilten Form der wässrigen Lösung A1 in einer wässrigen Lösung A2, umfassend ein Salz eines Erdalkalimetalls, anhand dessen man Kugeln erhält, die aus einem Hydrogel gebildet sind, das Silberphosphat und das Alginat aus Alkalisalz umfasst;
c) Trocknen der Kugeln; und
d) Kalzinieren der getrockneten Kugeln.

2. Verfahren nach Anspruch 1, das weiter zwischen dem Schritt b) und dem Schritt c) ein Ersetzen des gesamten Wassers des Hydrogels oder eines Teils davon durch ein organisches Lösungsmittel, das eine Standard-Siedetemperatur von weniger als 100 °C aufweist, vorzugsweise durch einen Alkohol, umfasst.

3. Verfahren nach Anspruch 1, oder Anspruch 2, wobei die wässrige Lösung A1 0,5 Ma.-% bis 3 Ma.-% an Alginat aus Alkalimetall, und 5 Ma.-% bis 10 Ma.-% an anorganischem Material umfasst, wobei die Massenprozente auf die Masse der wässrigen Lösung A1 bezogen sind.

4. Verfahren nach einem der Ansprüche 1 bis 3, wobei das Erdalkalimetallsalz ein Calciumsalz oder Bariumsalz, vorzugsweise ein Nitrat ist.

5. Verfahren nach einem der Ansprüche 1 bis 4, wobei die Kugeln bei einer Temperatur, die von 300 °C bis 600 °C reicht, 1 bis 5 Stunden lang kalziniert werden.

6. Anorganisches Material, das aus Partikeln gebildet ist, die jeweils eine feste Phase umfassen, wobei die feste Phase umfasst:
- Silber im oxidierten Zustand, an Phosphor gebunden, und, optional, Silber im oxidierten Zustand an ein oder mehrere Kationen gebunden, die aus Molybdän, Bor, Vanadium, Chrom und Wolfram und/oder einem oder mehreren Metalloxyden ausgewählt sind,
- offene, miteinander verbundene Poren, deren Oberfläche Silber im Metallzustand umfasst,
wobei das Material durch ein Verfahren nach einem der Ansprüche 1 bis 5 erhalten wird.

7. Material nach Anspruch 6, dessen Partikel Abmessungen aufweisen, die zwischen 300 µm und 3000 µm liegen.

8. Verwendung eines Materials nach Anspruch 6 oder Anspruch 7 zum Absorbieren von gasförmigem Jod durch In-Kontakt-bringen des Materials mit dem gasförmigen Jod.

9. Verwendung eines Materials nach Anspruch 6 oder Anspruch 7 zum Einfangen von Jod, das in einem Abgas vorhanden ist, durch In-Kontakt-bringen des Materials mit dem Abgas.

10. Verfahren zum Behandeln eines Abgases, das Jod umfasst, das die Schritte umfasst zum:
i) Einfangen von Jod durch In-Kontakt-bringen des Abgases mit einem Material nach Anspruch 6 oder Anspruch 7, wodurch ein Material erhalten wird, das Silberjodid umfasst; danach
ii) Wärmebehandeln des Materials, das Silberjodid umfasst, wodurch das Material, das Silberjodid umfasst, in eine glasartige oder Glaskeramikmatrix umgewandelt wird, in der das Silberjodid eingeschlossen ist.

11. Verfahren zum Behandeln nach Anspruch 10, wobei der Schritt ii) ein Erhitzen des Materials auf eine Temperatur umfasst, die von 400 °C bis 650 °C reicht.

12. Verfahren zum Konditionieren von gasförmigem Jod in einer glasartigen oder Glaskeramikmatrix, welches das Umsetzen des Verfahrens zum Behandeln eines Abgases, das Jod umfasst, nach Anspruch 10 oder Anspruch 11 umfasst.

13. Verwendung nach Anspruch 8 oder Anspruch 9, oder Verfahren nach einem der Ansprüche 10 bis 12, wobei das in dem Abgas vorhandene Jod radioaktives Jod ist.

14. Verwendung oder Verfahren nach Anspruch 13, wobei das radioaktive Jod Jod-129 ist.

## Claims

1. Process for preparing an inorganic material which is formed by particles each comprising a solid phase, the solid phase comprising:
- silver in an oxidised state bonded to phosphorus and, optionally, silver in an oxidised state bonded to one or more cations selected from molybdenum, boron, vanadium, chromium and tungsten and/or one or more metal oxides, and
- open, interconnected pores, the surface of which comprises silver in metal state,
which process comprises the steps of:
a) preparing an aqueous solution A1 comprising an alginate of an alkali metal and an inorganic material comprising silver phosphate and, optionally, one or more oxidised silver compounds bonded to a cation selected from molybdenum, boron, vanadium, chromium and tungsten and/or one or more metal oxides;
b) extruding in a divided form the aqueous solution A1 into an aqueous solution A2 comprising a salt of an alkaline earth metal, whereby beads formed by a hydrogel comprising silver phosphate and alkali salt alginate are obtained;
c) drying the beads; and
d) calcining the beads dried.

2. Process according to claim 1, which further comprises, between step b) and step c), replacing all or part of the water in the hydrogel with an organic solvent having a standard boiling temperature below 100°C, preferably with an alcohol.

3. Process according to claim 1 or claim 2, wherein the aqueous solution A1 comprises from 0.5% to 3% by weight of alkali metal alginate and from 5% to 10% by weight of inorganic material, the weight percentages being based on the weight of the aqueous solution A1.

4. Process according to any of claims 1 to 3, wherein the alkaline earth metal salt is a calcium or barium salt, preferably a nitrate.

5. Process according to any of claims 1 to 4, wherein the beads are calcined at a temperature ranging from 300°C to 600°C for 1 to 5 hours.

6. Inorganic material, which is formed by particles each comprising a solid phase, the solid phase comprising:
- silver in an oxidised state bonded to phosphorus and, optionally, silver in an oxidised state bonded to one or more cations selected from molybdenum, boron, vanadium, chromium and tungsten and/or one or more metal oxides, and
- open, interconnected pores, the surface of which comprises silver in metal state,
which material is obtained by a process according to any of claims 1 to 5.

7. Material according to claim 6, the particles of which have dimensions between 300 µm and 3000 µm.

8. Use of a material according to claim 6 or claim 7, for adsorbing iodine gas by contacting the material with iodine gas.

9. Use of a material according to claim 6 or claim 7, for capturing iodine present in a gaseous effluent by contacting the material with the gaseous effluent.

10. Process for treating a gaseous effluent comprising iodine, which comprises the steps of:
i) capturing iodine by contacting the gaseous effluent with a material according to claim 6 or claim 7, whereby a material comprising silver iodide is obtained; and then
ii) heat treating the material comprising silver iodide, whereby the material comprising silver iodide is converted into a vitreous or vitroceramic matrix in which the silver iodide is confined.

11. Treatment process according to claim 10, wherein step ii) comprises heating the material to a temperature ranging from 400°C to 650°C.

12. Process for encapsulating iodine gas into a vitreous or vitroceramic matrix, which comprises implementing the process for treating a gaseous effluent comprising iodine according to claim 10 or claim 11.

13. Use according to claim 8 or claim 9, or process according to any of claims 10 to 12, wherein the iodine present in the gaseous effluent is radioactive iodine.

14. Use or process according to claim 13, wherein the radioactive iodine is iodine-129.
